(19) **Europäisches Patentamt**

**European Patent Office**

**Office européen des brevets**

(11) **EP 0 927 506 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(21) Anmeldenummer: **98942458.5**

(22) Anmeldetag: **24.06.1998**

(51) Int Cl.7: **H05B 41/24**, H05B 41/28

(86) Internationale Anmeldenummer:
**PCT/DE98/01723**

(87) Internationale Veröffentlichungsnummer:
**WO 99/05892 (04.02.1999 Gazette 1999/05)**

(54) **BELEUCHTUNGSSYSTEM MIT EINER DIELEKTRISCH BEHINDERTEN ENTLADUNGSLAMPE UND EINER SCHALTUNGSANORDNUNG ZUM ERZEUGEN VON IMPULSSPANNUNGSFOLGEN.**

LIGHTING SYSTEM COMPRISING A DIELECTRIC BARRIER DISCHARGE LAMP AND A CIRCUIT FOR GENERATING VOLTAGE PULSE SEQUENCES

SYSTEME D'ECLAIRAGE COMPRENANT UNE LAMPE A DECHARGE A BARRIERE DIELECTRIQUE ET UN CIRCUIT POUR PRODUIRE DES SEQUENCES D'IMPULSIONS

(84) Benannte Vertragsstaaten:
**AT BE CH DE ES FI FR GB IT LI NL SE**

(30) Priorität: **22.07.1997 DE 19731275**

(43) Veröffentlichungstag der Anmeldung:
**07.07.1999 Patentblatt 1999/27**

(73) Patentinhaber: **Patent-Treuhand-Gesellschaft für elektrische Glühlampen mbH 81543 München (DE)**

(72) Erfinder:
• **STATNIC, Eugen D-81243 München (DE)**
• **VESER, Alwin D-80803 München (DE)**
• **ERTL, Bernhard D-80798 München (DE)**

(56) Entgegenhaltungen:
**EP-A- 0 302 748        EP-A- 0 449 667
WO-A-94/23442        DE-A- 19 548 003
US-A- 4 742 278**

Bemerkungen:
Die Akte enthält technische Angaben, die nach dem Eingang der Anmeldung eingereicht wurden und die nicht in dieser Patentschrift enthalten sind.

## Beschreibung

### Technisches Gebiet

Die Erfindung betrifft ein Beleuchtungssystem mit einer Schaltungsanordnung zum Erzeugen von Impulsspannungsfolgen für den Betrieb von dielektrisch behinderten Entladungslampen.

Genauer dient die erfindungsgemäße Schaltungsanordnung zum Betreiben von Entladungslampen bzw. -strahlern, bei denen mindestens die Elektroden einer Polarität dielektrisch behindert sind, mittels unipolarer oder zumindest im wesentlichen unipolarer Spannungsimpulse, wie beispielsweise in der WO 94/23442 beschrieben. Diese Betriebsweise verwendet eine im Prinzip unbeschränkte Folge von Spannungsimpulsen die durch Totzeiten voneinander getrennt sind. Entscheidend für die Effizienz der Nutzstrahlungserzeugung sind im wesentlichen die Impulsform sowie die Zeitdauern der Puls- bzw. Totzeiten. Typische Tastverhältnisse liegen im Bereich zwischen von ca. 1:5 bis 1:10. Der Spitzenwert der Hochspannungsimpulse hängt vom Aufbau der jeweiligen Lampe, z.B. der Anzahl der Elektroden, der Schlagweite und der Art sowie der Dicke des Dielektrikums ab und liegt typisch zwischen 1kV und 5kV. Auch die Impulswiederholfrequenz ist von der Geometrie der Lampe abhängig und liegt im Bereich von ca. 25kHz bis ca. 80kHz. Herkömmliche Betriebsweisen für derartige Lampen verwenden hingegen sinusförmige Wechselspannungen.

Dielektrisch behinderte Entladungen weisen im Unterschied zu konventionellen Entladungen, wie sie üblicherweise für Entladungslampen Verwendung finden, ein zwischen dem Innern des Entladungsraums und der oder den Elektroden einer Polarität (einseitig dielektrisch behindert) oder aber sämtlichen Elektroden, d.h. den Elektroden beider Polarität (beidseitig dielektrisch behindert), angeordnetes Dielektrikum auf. Derartige Elektroden bezeichnet man auch als dielektrisch behinderte Elektroden. Der Ladungsträgertransport von einer dielektrisch behinderten Elektrode zum ionisierten Gas der Entladungsstrecke erfolgt daher nicht durch einen Leitungsstrom sondern durch einen Verschiebungsstrom. Daraus resultiert eine kapazitive Komponente im elektrotechnischen Ersatzschaltbild einer derartigen Entladung. Folglich muß die Schaltungsanordnung geeignet sein, die Energie kapazitiv in die Lampe einzukoppeln.

### Stand der Technik

Aus der DE 195 48 003 A1 ist eine elektrische Schaltungsanordnung zur Erzeugung von Impulsspannungsfolgen, insbesondere für den Betrieb von dielektrisch behinderten Entladungen bekannt. Sie weist einen von einer Eingangsspannung gespeisten Ladekreis mit einem Ladekondensator, einen Entlade- und Pulskreis mit einem schnellen steuerbaren Schalter, der mit einer getakteten Ansteuerschaltung verbunden ist und einen Impulsübertrager mit daran angeschlossener Last sowie einen Rückspeisekreis mit einem Rückspeise-Stromventil und einem parallel zum Eingang des Ladekreises geschalteten Pufferkondensator auf. Während der Leitendphasen des Schalters wird jedesmal die im Ladekondensator gespeicherte elektrische Energie über den Impulsübertrager zur Last übertragen. Die von der Last und dem Impulsübertrager zurückschwingende Energie passiert den Rückspeisekreis, wird in den Rückspeisepunkt eingespeist und vom Pufferkondensators aufgenommen. Dadurch wird während der Rückschwingphasen das Potential der Sekundärwicklung auf das Potential der Eingangsspannung geklemmt. Außerdem wird auf diese Weise die rückgespeiste Energie für die Ladephasen des Ladekondensators mit verwendet. Nachteilig bei dieser Lösung sind die hohe Impulsbelastung des Impulsübertragers und des Schalters, der relativ schlechte Wirkungsgrad sowie der nicht unerhebliche Bauteileaufwand. Außerdem wirkt sich der konkrete Aufbau des Impulsübertragers kritisch auf die Funktion der Schaltung aus. Der optimale Aufbau des Impulsübertragers ist zudem nur experimentell bestimmbar.

EP-A-449 667 offenbart eine Schaltungsanordnung zum gepulsten Betreiben von Neonröhren mittels einer longitudinalen Kaltkathoden-Glimmentladungsäule. Die Schaltungsanordnung ermöglicht eine Beeinflussung der Länge der das Innere der Neonröhre üblicherweise vollständig ausfüllenden leuchtenden Entladungssäule durch die Höhe der Spannungspulse. Optional ist nur eine der beiden an den Stirnseiten innerhalb der Neonröhre angeordneten Kaltkathoden mit dem auf das Erdpotential bezogenen Hochspannungsausgang der Schaltungsanordnung verbunden. Die andere Kaltkathode ist hingegen nur mit dem Erdpotential verbunden. In diesem Fall erfolgt der Stromfluß zum einen über die erstgenannte Kaltkathode und zum anderen mittels einseitig kapazitiver Kopplung der Entladungssäule über parasitäre Kapazitäten an das Erdpotential.

### Darstellung der Erfindung

Es ist Aufgabe der vorliegenden Erfindung, ein Beleuchtungssystem mit einer dielektrisch behinderten Entladungslampe und einer Schaltungsanordnung bereitzustellen, mit deren Hilfe sich weitgehend unipolare Impulsspannungsfolgen mit geringen Schaltungsverlusten erzeugen lassen. Außerdem sollen Impulsspannungsfolgen mit möglichst glatten Impulsformen an überwiegend kapazitiv wirkenden Lasten realisierbar sein. Ein weiterer Aspekt der Erfindung ist, eine relativ einfache Schaltung mit möglichst wenig Bauelementen zu realisieren.

Diese Aufgabe wird durch die Merkmale des Anspruchs 1 gelöst. Besonders vorteilhafte Ausgestaltungen finden sich in den abhängigen Ansprüchen.

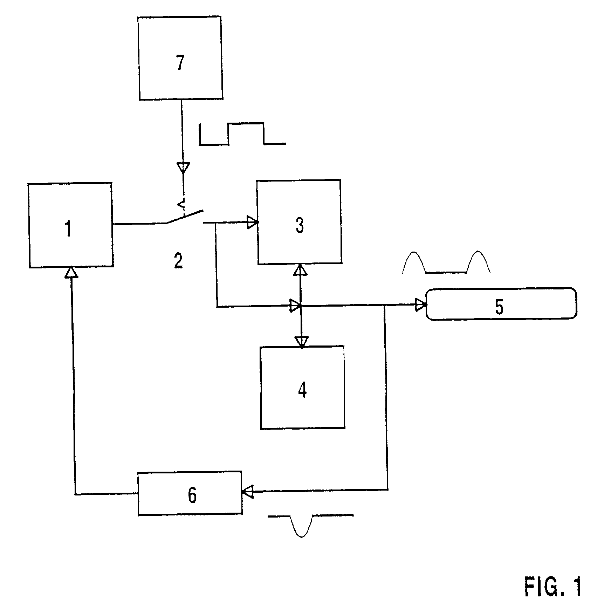

Der Grundgedanke der Erfindung wird im folgenden anhand einer vereinfachten Blockskizze in Figur 1 erläutert. Von einer Energieversorgungsquelle 1 gespeist, wird während der Lcitendphase eines steuerbaren Schalters 2 zunächst ein induktives Energiereservoir 3 zyklisch aufgeladen. Nach der Aufladephase, d. h. sobald der Schalter 2 sperrt, wird die im induktiven Energiereservoir 3 gespeicherte magnetische Energie auf ein kapazitives Energiereservoir 4 übertragen. Dadurch wird am induktiven Energiereservoir 3 eine erste Spannungshalbwelle einer sinusähnlichen Schwingung erzeugt während am kapazitiven Energiereservoir 4 eine ebensolche Spannungshalbwelle, aber mit entgegengesetzter Phase erzeugt wird. Diese erste Spannungshalbwelle wird als Spannungsimpuls für die Lampe 5 - welche entweder an das induktive 3 oder an das kapazitive Energiereservoir 4 gekoppelt ist - genutzt. Danach wird die Energie vom kapazitiven Energiereservoir 4 über das induktiven Energiereservoir 3 in die Energieversorgungsquelle 1, die vorteilhaft ein zusätzliches Rückspeisereservoir (nicht dargestellt) enthält, zurückgespeist. Dabei ist die Spannung am kapazitiven Energiereservoir 4 auf die über dem geöffneten Stromventil 6 abfallende Spannung geklemmt. Folglich ist während dessen die Spannung am induktiven Energiereservoir 3 gleich der Versorgungsspannung. Nach einer vorgebbaren Zeit wiederholt sich dieser Vorgang zyklisch. Die zeitliche Steuerung erfolgt über einen mit dem steuerbaren Schalter 2 verbundenen Signalgeber 7.

Auf diese Weise wird eine Folge von im wesentlichen halbsinusförmigen Spannungspulsen gleicher Phase an den Lampenelektroden erzeugt, wobei die einzelnen Spannungspulse durch Totzeiten, d.h. Zeiten an denen die Spannung an den Elektroden weitgehend konstant und deutlich kleiner als der Scheitelwert der Spannungspulse, bevorzugt Nahe Null ist, voneinander getrennt sind.

Dieser Erfindungsgedanke wird im Kern durch die Serienschaltung einer unter anderem als induktives Energiereservoir dienenden Induktivität, im folgenden verkürzend auch als Schwingkreisinduktivität bezeichnet und eines steuerbaren Schalters realisiert, wobei dem Schalter eine als kapazitives Energiereservoir dienende Kapazität - im folgenden verkürzend auch als Schwingkreiskapazität bezeichnet - und das Stromventil parallel geschaltet sind.

Durch die konkreten Werte für Schwingkreisinduktivität und Schwingkreiskapazität ist unter anderem die Breite der Spannungsimpulse beeinflußbar. Typische Werte für den Betrieb von Strahlungsquellen der eingangs erläuterten Art liegen im Bereich zwischen ca. 500 µH und 10 mH für die Schwingkreisinduktivität bzw. ca. 100 pF und 1 µF für die Schwingkreiskapazität.

Als Schwingkreiskapazität kann beispielsweise ein Kondensator, aber auch die inhärente Kapazität einer mit dielektrisch behinderten Elektroden versehenen Entladungsanordnung selbst dienen. Falls der Schalter durch einen steuerbaren Halbleiterschalter realisiert ist, z.B. durch einen bipolaren Transistor, IGBT (Insulated Gate Bipolar Transistor) oder MOSFET (Metal Oxid Semiconductor Field Effect Transistor), kann auch die Sperrschichtkapazität des Halbleiterschalters als Schwingkreiskapazität dienen, da die Schwingkreiskapazität - wie später noch gezeigt wird - nur während der Sperrphase des Schalters für die Funktion der Schaltungsanordnung von Bedeutung ist. Allerdings bietet ein zusätzlicher Kondensator den Vorteil, damit die Breite des Spannungspulses beeinflussen zu können. Der Wert eines zusätzlichen Kondensators wird also je nach gewünschter Pulsbreite gewählt. Als Rückspeisereservoir kann ein parallel zu den Eingangsklemmen der Anordnung geschalteter Kondensator dienen. Das Rückspeisereservoir kann auch Bestandteil einer rückspeisefähigen Energieversorgung sein. Im letzteren Fall kann auf ein eigenes Rückspeisereservoir im Eingang der Schaltungsanordnung verzichtet werden.

Die Ankopplung der Entladungsanordnung bzw. Lampe erfolgt im einfachsten Fall direkt am Kondensator bzw. am steuerbaren Halbleiterschalter. Dazu sind die Lampenzuleitungen mit den Anschlüssen des Kondensators bzw. des Halbleiterschalters verbunden. Diese einfache Lösung eignet sich besonders für Lampen mit einer relativ niedrigen maximalen Impulsspannung (Impulsspannungen von kleiner ca. 1500V), da hier die maximale Sperrspannung des Halbleiterschalters die maximale erzeugbare Impulsspannung begrenzt.

In einer bevorzugten Variante für Lampen mit einer höheren maximalen Impulsspannung ist die Sekundärwicklung eines Spartransformators in eine der Lampenzuleitungen geschaltet. Die als induktives Energiereservoir dienende Schwingkreisinduktivität ist in diesem Fall durch die Primärwicklung dieses Spartransformators realisiert.

In einer weiteren Variante ist die Lampe schließlich über einen Hochspannungsübertrager angekoppelt. Die Primärwicklung des Hochspannungsübertragers fungiert als induktives Energiereservoir. Die Lampenzuleitungen sind hier mit den Anschlüssen der Sekundärwicklung verbunden. Mit dieser Variante lassen sich ebenfalls höhere maximale Impulsspannungen erzeugen. Allerdings ist diese Lösung aufwendiger und deshalb auch teurer als die vorgenannte Lösung. Nachteilig gegenüber der Spartransformator-Variante sind außerdem die höheren Verluste und das ungünstigere Wicklungsverhältnis. Um beispielsweise die Spannung an den Lampenzuleitungen gegenüber der Spannung an der Primärwicklung zu verdreifachen, ist ebenfalls ein dreifaches Übersetzungsverhältnis erforderlich. Aufgrund des gleichen Wikkelsinns und der elektrischen Verschaltung von Primär- und Sekundärwicklung der Spartransformator-Variante ist hierfür hingegen ein zweifaches Übersetzungsverhältnis ausreichend.

Die erfindungsgemäße Schaltungsanordnung eignen sich insbesondere auch zum Betrieb an niedrigen Spannungen, z.B. für den Batteriebetrieb beim Einsatz im Kfz o.ä.. Für den Betrieb an Netzspannung wird der Schaltungsanordnung ein Konverter zur Spannungsanpassung vorgeschaltet, mit dem gleichzeitig auch eine sinusförmige Netzstromaufnahme realisiert werden kann.

**Beschreibung der Zeichnungen**

Im folgenden soll die Erfindung anhand mehrerer Ausführungsbeispiele näher erläutert werden. Es zeigen:

Figur 1     eine Blockskizze zur Darstellung des Prinzips der Erfindung,

Figur 2     ein erstes kostengünstiges Ausführungsbeispiel für relativ niedrige Impulsspannungen,

Figur 3     ein weiteres Ausführungsbeispiel mit einem Hochspannungsübertrager für höhere Impulsspannungen,

Figur 4     noch ein weiteres Ausführungsbeispiel mit einem Spartransformator für höhere Impulsspannungen,

Figur 5     Meßwertkuven zum Zeitverhalten der Schaltung aus Figur 4,

Figur 6     ein Ausführungsbeispiel mit einem MOSFET als Schalter.

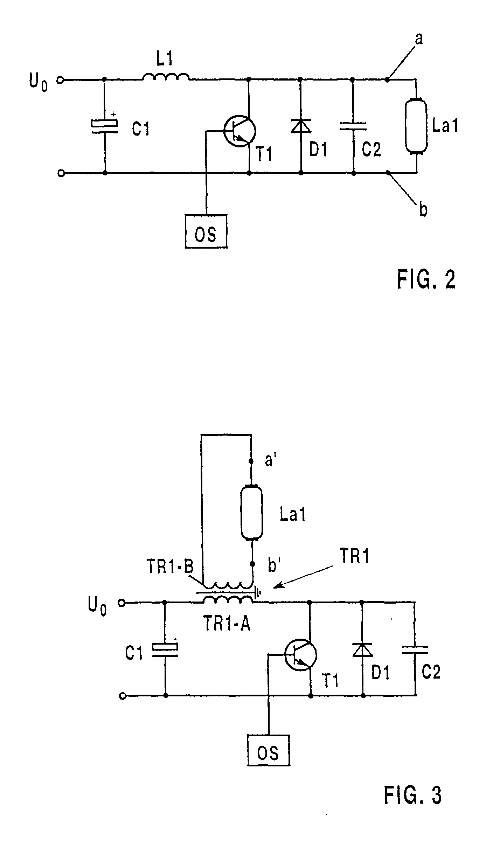

Die Figur 2 zeigt in vereinfachter Darstellung eine bevorzugte Schaltungsanordnung für Lampen mit relativ geringer maximal erforderlicher Impulsspannung. Da in dieser Schaltungsanordnung die Lampe parallel zum Halbleiterschalter liegt, ist die maximal erzeugbare Impulsspannung nämlich durch die maximale Sperrspannung des Halbleiterschalters begrenzt.

Die Schaltungsanordnung besteht aus einem Pufferkondensator C1, der von einer Gleichspannung +U$_o$, z.B. der Ausgangsspannung einer Gleichrichterschaltung oder einer Batterie, versorgt wird und auch zusätzlich als Rückspeisereservoir dient, einem Serienkreis aus Schwingkreisinduktivität L1 und Bipolartransistor T1 mit Freilaufdiode D1, welcher Serienkreis an die Minusleitung des Pufferkondensators C1 angeschlossen ist sowie einem Schwingkreiskondensator C2, der parallel zum Transistor T1 geschaltet ist. Eine Lampe La1 mit dielektrisch behinderten Elektroden ist mittels der Anschlüsse a,b parallel zum Schwingkreiskondensator C2 geschaltet.

Der Transistor T1 wird von einem asymmetrischen Rechteckoszillator OS, z.B. einem an sich bekannten Pulsgenerator-IC, angesteuert. Solange der Transistor T1 leitet, fließt ein linear ansteigender Strom durch ihn und durch die Schwingkreisinduktivität L1.

Zum Ende der Einschaltzeit t$_1$ erreicht der Strom den Spitzenwert Is. Zu diesem Zeitpunkt ist in der Schwingkreisinduktivität L1 die magnetische Energie

$$W_m = 0{,}5 \cdot L_1 \cdot I_S^2 \qquad (1)$$

gespeichert. Zum Zeitpunkt t = t$_1$ wird der Transistor T1 ausgeschaltet und es folgt eine freie Sinusschwingung mit der Periode

$$T_s = 2 \cdot \pi \cdot \sqrt{L_1 \cdot C_2}. \qquad (2)$$

Dabei lädt die magnetische Energie W$_m$ den Schwingkreiskondensator C2 auf eine Spannung U$_{C2}$, die sich aus der Energie W$_m$ ergibt gemäß:

$$W_m = 0{,}5 \cdot L_1 \cdot I_S^2 = 0{,}5 \cdot C_2 \cdot U_{C2}^2 , \qquad (3)$$

d.h.

$$U_{C2} = \sqrt{\frac{2 \cdot W_m}{C_2}}. \qquad (4)$$

Bei dieser Abschätzung für den Serienschwingkreis C1,L1,C2 ist die Kapazität des Pufferkondensators C1, typisch einige µF, gegenüber der Kapazität des Schwingkreiskondensators C2, typisch mehrere 100 pF, vernachlässigt worden.

Die positive Halbwelle der Sinusschwingung am Schwingkreiskondensators C2 mit der Amplitude U$_{C2}$ liegt parallel zum Transistor T1 und sperrt die antiparallele Diode D1. Die negative Halbwelle wird durch die Diode D1 geklemmt und die Schwingkreisinduktivität L1 speist Energie in den Rückspeisekondensator C1 zurück. Auf diese Weise wird eine halbsinusähnliche Impulsspannung U$_i$ mit einer Amplitude erzeugt, die viel höher ist als die Versorgungsspannung U$_0$ . Dabei ist

$$t_i = \pi \cdot \sqrt{L1 \cdot C2} \qquad (5)$$

die Breite des Spannungspulses.

Die Figur 3 zeigt eine Variante der Schaltung aus Figur 2, die auch für Lampen mit höheren max. Impulsspannungen geeignet ist. Gleiche Bauteile sind mit gleichen Bezugszeichen versehen. Hier ist die Schwingkreisinduktivität L1 aus Figur 2 durch einen Transformator TR1 ersetzt. Die Lampe La1 ist mittels der Anschlüsse a',b' an der Sekundärwicklung TR1-B des Transformators TR1 angeschlossen. Dadurch können auch Lampen mit einer maximalen Impulsspannung, die deutlich oberhalb der maximalen Sperrspannung des Halbleiterschalters T1 liegt, betrieben werden.

Der Transistor T1 wird, wie bei der Schaltung von Figur 2, von einem asymmetrischen Rechteckoszillator OS angesteuert. Im Leitendzustand des Transistors T1 fließt ein linear ansteigender Strom durch die Primärwicklung TR1-A des Transformators TR1 mit der Induktivität $L_P$ und durch den Transistors T1. Zum Ende der Einschaltzeit $t_1$ erreicht der Strom den Spitzenwert $I_S$. Zu diesem Zeitpunkt ist in der Primärinduktivität $L_P$ eine Energie

$$W_m = 0{,}5 \cdot L_P \cdot I_S^2 \qquad (6)$$

gespeichert.

Zum Zeitpunkt $t = t_1$ wird der Transistor T1 ausgeschaltet und es folgt eine freie Sinusschwingung mit der Periode

$$T_s = 2 \cdot \pi \cdot \sqrt{L_P \cdot C_2}. \qquad (7)$$

Dabei lädt die magnetische Energie $W_m$ den Schwingkreiskondensator C2 auf eine Spannung $U_{C2}$, die der Energie $W_m$ entspricht:

$$W_m = 0{,}5 \cdot L_P \cdot I_S^2 = 0{,}5 \cdot C_2 \cdot U_{C2}^2 , \qquad (8)$$

d.h.

$$U_{C2} = \sqrt{\frac{2 \cdot W_m}{C_2}} . \qquad (9)$$

An der Primärwicklung TR1-A des Transformators TR1 liegt damit die Spannung

$$U_{LP} = U_{C2} - U_O . \qquad (10)$$

Diese Spannung $U_{LP}$ wird entsprechend dem Übersetzungsverhältnis

$$ü = \frac{w_S}{w_P} \qquad (11)$$

des Transformators TR1 auf die Sekundärwicklung TR1-B transformiert und liegt folglich an der dort angeschlossene Lampe La1 an. In der Gleichung (12) bedeuten ws die Sekundär- und $w_P$ die Primärwindungszahl. Die Spannung $U_{LS}$ an der Sekundärwicklung TR1-B des Transformators TR1 beträgt damit

$$U_{LS} = U_{LP} \cdot ü. \qquad (12)$$

Die positive Halbwelle der Sinusschwingung am Schwingkreiskondensator C2 mit der Amplitude $U_{C2}$ liegt parallel zum Transistor T1 und sperrt somit die antiparallele Diode D1. Die negative Halbwelle wird hingegen durch die Diode D1 geklemmt während über die Primärinduktivität $L_P$ des Transformators TR1 Energie in den Rückspeisekondensator C1 zurückgespeist wird.

Während dieser Rückspeisung liegt an der Primärinduktivität $L_P$ die Spannung

$$U_{LP} = U_O , \qquad (13)$$

die ebenfalls entsprechend dem Übersetzungsverhältnis ü des Transformators TR1 auf die Sekundärwicklung TR1-B transformiert wird. Folglich liegt während der Impulspausen, d.h. während der Totzeiten, an der Lampe La1 eine Offsetspannung. Um eine Beeinträchtigung des Lampenbetriebes auszuschließen, ist die Schaltung so dimensioniert, daß die Offsetspannung sehr viel kleiner als die Impulsspannung ist.

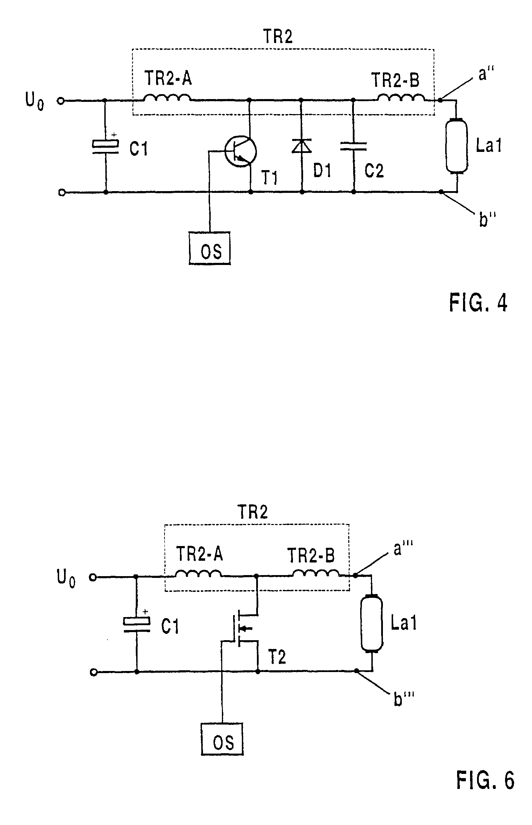

In Figur 4 ist eine bevorzugte Variante der Schaltung aus Figur 3 schcmatisch dargestellt, die ebenfalls für Lampen mit höheren max. Impulsspannungen geeignet ist.

In dieser Variante ist der Transformators TR1 durch einen Spartransformator TR2 ersetzt, dessen Primärwicklung TR2-A als induktives Energiereservoir dient und dessen Sekundärwicklung TR2-B zwischen dem Schwingkreiskondensator C2 und dem korrespondierenden Anschluß a" der Lampe La1 geschaltet ist. Die Lampe La1 ist folglich mittels der Anschlüsse a",b" parallel zur Serienschaltung aus Sekundärwicklung TR2-B und Schwingkreiskondensator C2 geschaltet. Ein daraus resultierender Vorteil dieser Lösung gegenüber jener aus Figur 3 ist das günstigere Wicklungsverhältnis. Um beispielsweise die Spannung an den Lampenzuleitungen gegenüber der Spannung an der Primärwicklung TR2-A zu verdreifachen, ist aufgrund des gleichen Wickelsinns und der elektrischen Verschaltung von Primär- TR2-A und Sekundärwicklung TR2-B der Spartransformator-Variante TR2 bereits ein zweifaches Übersetzungsverhältnis ausreichend. Bei der Lösung aus Figur 3 ist hierfür hingegen ein dreifaches Übersetzungsverhältnis erforderlich. Davon abgesehen entspricht die sonstige Funktion der Variante in Figur 4 derjenigen Funktion, die bereits bei der Erläuterung zu Figur 3 beschrieben wurde. Weitere Vorteile gegenüber der Lösung aus Figur 3 sind eine geringere Streuinduktivität und geringere Verluste sowie eine geringere Wicklungskapazität. Aufgrund der geringeren Wicklungskapazität sind Spannungsimpulse mit steileren Impulsflanken möglich, was für eine effiziente Betriebsweise von Strahlern mit gepulst betriebener, dielektrisch behinderter Entladung vorteilhaft ist.

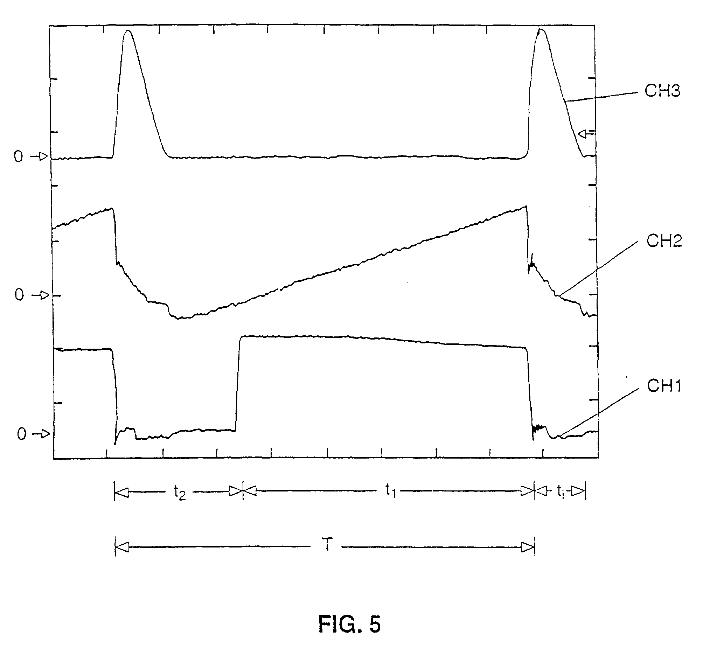

In Figur 5 sind Meßkurven des Ansteuersignals für den Transistor T1 (CH1), des Stroms durch die Primärwicklung TR2-A (CH2) und der Spannung an der Lampe La1 (CH3) dargestellt. Auf der x-Achse ist die Zeit t (eine Einheit entspricht **2** μs) und auf der y-Achse die jeweilige Signalstärke in willkürlichen Einheiten aufgetragen. Wie aus der Figur 5 entnehmbar, ist die Pausenzeit zwischen zwei Spannungspulsen durch die Länge der Periode T des Steuersignals beeinflußbar. Ebenfalls aus der Figur 5 entnehmbar ist die Forderung, daß einerseits die Dauer der Auszeit $t_2$ des Transistors T1 länger als die Dauer $t_i$ des Spannungspulses sein muß, weil sonst die abfallende Flanke des Spannungsimpulses abgeschnitten wird. Andererseits muß die Auszeit $t_2$ vor dem Nulldurchgang des Strom durch die Schwingkreisinduktivität L1 beendet sein, weil sonst in der Regel störende Schwingungen auftreten. Durch die Dauer der Einzeit $t_1$ des Transistors T1 ist die Pausendauer zwischen den einzelnen Spannungspulsen beeinflußbar. Mittels der Parameter Einzeit $t_1$ und Auszeit $t_2$ ist außerdem eine angeschlossene Strahlungsquelle dimmbar.

In Figur 6 ist eine Variante der Spartransformatorschaltung aus Figur 4 schematisch dargestellt. Der Schwingkreiskondensator ist hier durch die der Lampe La1 immanente Kapazität (nicht dargestellt) bzw. die durch den Spartransformator transformierte Lampenkapazität und zusätzlich durch die Sperrschichtkapazität (nicht dargestellt) des MOSFET T2 realisiert. Auf eine ergänzende Schwingkreiskapazität in Form eines diskreten Kondensators, wie beispielsweise in Figur 4, ist hier verzichtet. Außerdem ist auf eine diskrete Freilaufdiode verzichtet, weil deren Aufgabe durch die im MOSFET T2 inhärente Diode (nicht dargestellt) übernommen wird. Die restliche Schaltung und die prinzipielle Funktionsweise entspricht jener aus Figur 4. Die Lampe La1 ist folglich mittels der Anschlüsse a''',b''' parallel zur Serienschaltung aus Sekundärwicklung TR2-B und MOSFET T2 geschaltet. Diese Schaltungsvariante kommt also mit ausgesprochen wenig Bauteilen aus.

**Patentansprüche**

1. Beleuchtungssystem mit

   • einer Impulsspannungsquelle, die geeignet ist, im Betrieb durch Pausen voneinander getrennte Spannungspulse zu liefern,

   • einer dielektrisch behinderten Entladungslampe (Ea1) mit

     - einem zumindest teilweise transparenten und mit einer Gasfüllung gefüllten geschlossen oder von einem Gas oder Gasgemisch durchströmten offenen Entladungsgefäß aus elektrisch nichtleitendem Material und

     - Elektroden, die mit der Impulsspannungsquelle verbunden sind, wobei zumindest die Elektroden einer Polarität vom Innern des Entladungsgefäßes durch dielektrisches Material getrennt sind,

   und wobei die Impulsspannungsquelle eine elektrische Schaltungsanordnung zum Erzeugen von Impulsspannungsfolgen für den Betrieb von dielektrisch behinderten Entladungen innerhalb des Entladungsgefäßes der dielektrisch behinderten Entladungslampe (La1) aufweist, mit

   • einer Schwingkreisinduktivität (L1; TR1-A; TR2-A),

   • einem gesteuerten Schalter (T1, T2), der mit der Schwingkreisinduktivität (L1; TR1-A; TR2-A) in Serie geschaltet ist,

   • einem Impulsgenerator (OS), welcher den Schalter (T1) ansteuert,

   • einem Stromventil (D1), welches antiparallel zum Schalter (T1) geschaltet ist, wobei das Stromventil durch ein diskretes Element oder durch die integrierte Source-Drain-Diode eines als Schalter wirkenden MOSFETs (T2) gebildet ist,

   • einer Schwingkreiskapazität (C2), welche parallel zum Schalter (T1) geschaltet ist, wobei die Schwingkreiskapazität durch ein diskretes Element oder zum Teil durch die Sperrschichtkapazität eines als Schalter wirkenden MOSFETs (T2) und/oder durch die immanente Kapazität der angeschlossenen dielektrisch behinderten Entladungslampe (La1) gebildet ist,

   • einem Mittel (a,b; TR1-B,a'b'; TR2-B,a''b'') zum Ankoppeln der dielektrisch behinderten Entladungslampe (La1),

   wobei im Betrieb der Schalter (T1, T2) mittels des Ansteuersignals des Impulsgenerators (OS) abwechselnd leitet bzw. sperrt, wodurch zwischen den Elektroden der an dem Mittel angeschlossenen dielektrisch behinderten Entladungslampe (La1) eine Folge von durch Pausenzeiten getrennten Spannungsimpulsen erzeugt wird.

2. Beleuchtungssystem nach Anspruch 1, **dadurch gekennzeichnet, daß** der Wert der Schwingkreiskapazität im Bereich zwischen ca. 100 pF und 1 μF liegt.

3. Beleuchtungssystem nach Anspruch 1 oder 2, **dadurch gekennzeichnet, daß** der Wert der Schwingkreisinduktivität im Bereich zwischen ca. 500 µH und 10 mH liegt.

**4.** Beleuchtungssystem nach einem der vorstehenden Ansprüche, **dadurch gekennzeichnet, daß** der gesteuerte Schalter ein gesteuerter Halbleiter, insbesondere ein Transistor (T1; T2) ist.

**5.** Beleuchtungssystem nach Anspruch 4, **dadurch gekennzeichnet, daß** der gesteuerte Halbleiter ein MOSFET (Metal Oxide Semiconductor Field Effekt Transistor) (T2) ist.

**6.** Beleuchtungssystem nach einem der vorstehenden Ansprüche, **dadurch gekennzeichnet, daß** das Stromventil eine Diode (D1) ist.

**7.** Beleuchtungssystem nach einem der vorstehenden Ansprüche, **dadurch gekennzeichnet, daß** das Mittel zum Ankoppeln der dielektrisch behinderten Entladungslampe (La1) zwei Anschlüsse (a, b), die jeweils mit einem Pol des Schalters (T1) verbunden sind, umfaßt.

**8.** Beleuchtungssystem nach Anspruch 7, **dadurch gekennzeichnet, daß** das Mittel zum Ankoppeln der dielektrisch behinderten Entladungslampe (La1) zusätzlich die Sekundärwicklung (TR2-B) eines Spartransformators (TR2) umfaßt, welche Sekundärwicklung (TR2-B) zwischen einem ersten Pol des Schalters (T1; T2) und dem korrespondierenden Anschluß (a"; a''') für die dielektrisch behinderte Entladungslampe (La1) geschaltet ist, wobei die Primärwicklung (TR2-A) des Spartransformators (TR2) als die Schwingkreisinduktivität fungiert.

**9.** Beleuchtungssystem nach einem der Ansprüche 1 bis 7, **dadurch gekennzeichnet, daß** das Mittel zum Ankoppeln der dielektrisch behinderten Entladungslampe (La1) die Sekundärwicklung (TR1-B) eines Transformators (TR1) sowie zwei Anschlüsse (a', b'), die jeweils mit einem Pol der Sekundärwicklung (TR1-B) verbunden sind, umfaßt, wobei die Primärwicklung (TR1-A) des Transformators (TR1) als die Schwingkreisinduktivität fungiert.

**10.** Beleuchtungssystem nach einem der vorstehenden Ansprüche, **dadurch gekennzeichnet, daß** zusätzlich ein Puffer- und Rückspeisekondensator (C1) parallel zu der Serienschaltung aus Schwingkreisinduktivität (L1; TR1-A; TR2-A) und Schalter (T1) geschaltet ist.

**11.** Beleuchtungssystem nach Anspruch 10, **dadurch gekennzeichnet, daß** der Kapazitätswert des Puffer- und Rückspeisekondensators (C1) größer als der Wert der Schwingkreiskapazität (C2) ist.

**12.** Beleuchtungssystem nach einem der vorstehenden Ansprüche, **dadurch gekennzeichnet, daß** der Impulsgenerator ein Rechteckgenerator-IC (Integrated Circuit) ist.

## Claims

**1.** Lighting system having

- a pulsed-voltage source which is suitable for supplying voltage pulses which are separated from one another in operation by pauses,

- a dielectric barrier discharge lamp (La1) having

  - an at least partially transparent discharge vessel, which is closed and filled with a gas filling or is open and has a gas or a gas mixture flowing through it and is composed of electrically non-conductive material, and

  - electrodes which are connected to the pulsed-voltage source, at least the electrodes of one polarity being isolated from the interior of the discharge vessel by dielectric material,

and where the pulsed-voltage source has an electrical circuit arrangement for producing pulsed-voltage sequences for operation of discharges impeded dielectrically within the discharge vessel of the dielectric barrier discharge lamp (La1), having

- an oscillator-circuit inductance (L1; TR1-A; TR2-A),

- a controlled switch (T1, T2) which is connected in series with the oscillator circuit inductance (L1; TR1-A; TR2-A),

- a pulse generator (OS) which drives the switch (T1),

- a current valve (D1) which is connected back-to-back in parallel with the switch (T1), the current valve being formed by a discrete element or by the integrated source-drain of a MOSFET (T2) acting as a switch,

- an oscillator circuit capacitance (C2) which is connected in parallel with the switch (T1), the oscillator circuit capacitance being formed by a discrete element, or in part by a boundary-layer capacitance of a MOSFET (T2) acting as a switch and/or by the intrinsic capacitance of the dielectric barrier discharge lamp (La1) that is connected,

- a means (a,b; TR1-B,a'b'; TR2-B,a",b") for coupling the dielectrical barrier discharge lamp (La1),

the switch (T1, T2) switching on and off alternately in operation by means of the drive signal of the pulse generator (OS), as a result of which a sequence of voltage pulses, which are separated by pause times, is produced between the electrodes of the dielectrical barrier discharge lamp (La1) which is connected to the means.

2. Lighting system according to Claim 1, **characterized in that** the value of the oscillator circuit capacitance is in the range between about 100 pF and 1 μF.

3. Lighting system according to Claim 1 or 2, **characterized in that** the value of the oscillator circuit inductance is in the range between about 500 μH and 10 mH.

4. Lighting system according to one of the preceding claims, **characterized in that** the controlled switch is a controlled semiconductor, in particular a transistor (T1; T2).

5. Lighting system according to Claim 4, **characterized in that** the controlled semiconductor is a MOSFET (Metal Oxide Semiconductor Field Effect Transistor) (T2).

6. Lighting system according to one of the preceding claims, **characterized in that** the current valve is a diode (D1).

7. Lighting system according to one of the preceding claims, **characterized in that** the means for coupling the dielectric barrier discharge lamp (La1) comprises two connections (a, b) which are each connected to one pole of the switch (T1).

8. Lighting system according to Claim 7, **characterized in that** the means for coupling the dielectric barrier discharge lamp (La1) additionally comprises the secondary winding (TR2-B) of an autotransformer (TR2), which secondary winding (TR2-B) is connected between a first pole of the switch (T1; T2) and a corresponding connection (a"; a''') for the dielectric barrier discharge lamp (La1), the primary winding (TR2-A) of the autotransformer (TR2) acting as the oscillator circuit inductance.

9. Lighting system according to one of Claims 1 to 7, **characterized in that** the means for coupling the dielectric barrier, discharge lamp (La1) comprises the secondary winding (TR1-B) of a transformer (TR1) as well as two connections (a', b') which are each connected to one pole of the secondary winding (TR1-B), the primary winding (TR1-A) of the transformer (TR1) acting as the oscillator circuit inductance.

10. Lighting system according to one of the preceding claims, **characterized in that** a buffer and feedback capacitor (C1) is also connected in parallel with the series circuit formed by the oscillator circuit inductance (L1; TR1-A; TR2-A) and the switch (T1).

11. Lighting system according to Claim 10, **characterized in that** the capacitance of the buffer and feedback capacitor (C1) is greater than the value of the oscillator circuit capacitance (C2).

12. Lighting system according to one of the preceding claims, **characterized in that** the pulse generator is a square-wave generator IC (Integrated Circuit).

**Revendications**

1. Système d'éclairage comportant

- une source d'impulsions de tension qui convient pour fournir lors du fonctionnement des impulsions de tension séparées les unes des autres par des pauses,
- une lampe à décharge (La1) à barrière diélectrique comportant

  - une enceinte de décharge au moins partiellement transparente, fermée et remplie d'un gaz ou ouverte et traversée par un gaz ou un mélange gazeux, en un matériau non conducteur d'électricité et
  - des électrodes qui sont reliées à la source d'impulsions de tension, au moins les électrodes d'une polarité étant séparées de l'intérieur de l'enceinte de décharge par un matériau diélectrique,

  et la source d'impulsions de tension comportant un circuit électrique pour produire des trains d'impulsions de tensions pour le fonctionnement de décharges à barrière diélectrique à l'intérieur de l'enceinte de décharge de la lampe à décharge (La1) à barrière diélectrique, comportant

- une inductance de circuit oscillant (L1 ; TR1-A ; TR2-A),
- un interrupteur commandé (T1, T2) qui est branché en série avec l'inductance de circuit oscillant (L1 ; TR1-A ; TR2-A),
- un générateur d'impulsions (OS) qui commande l'interrupteur (T1),
- une valve de courant (D1) qui est branchée selon un branchement antiparallèle par rapport à l'interrupteur (T1), la valve de courant étant formée par un élément discret ou par la diode source-drain intégrée d'un MOSFET (T2) agissant comme interrupteur,

- une capacité de circuit oscillant (C2) qui est branchée en parallèle avec l'interrupteur (T1), la capacité de circuit, oscillant étant formée par un élément discret ou en partie par la capacité de transition d'un MOSFET (T2) agissant comme interrupteur et/ou par la capacité immanente de la lampe à décharge (La1) raccordée à barrière diélectrique,
- un moyen (a, b ; TR1-B, a', b' ; TR2-B, a", b") pour coupler la lampe à décharge (La1) à barrière diélectrique,

l'interrupteur (T1, T2) lors du fonctionnement étant en alternance conducteur ou bloquant selon le signal de commande du générateur d'impulsions (OS), ce qui fait qu'un train d'impulsions de tension séparées par des temps de pause est produite entre les électrodes de la lampe à décharge (La1) à barrière diélectrique et raccordée à ce moyen.

2. Système d'éclairage selon la revendication 1, **caractérisé par le fait que** la valeur de la capacité de circuit oscillant est comprise entre environ 100 pF et 1 μF.

3. Système d'éclairage selon la revendication 1 ou 2, **caractérisé par le fait que** la valeur de l'inductance de circuit oscillant est comprise entre environ 500 μH et 10 mH.

4. Système d'éclairage selon l'une des revendications précédentes, **caractérisé par le fait que** l'interrupteur commandé est un semi-conducteur commandé, notamment un transistor (T1 ; T2).

5. Système d'éclairage selon la revendication 4, **caractérisé par le fait que** le semi-conducteur commandé est un MOSFET (Metal Oxide Semiconductor Field Effect Transistor) (T2).

6. Système d'éclairage selon l'une des revendications précédentes, **caractérisé par le fait que** la valve de courant est une diode (D1).

7. Système d'éclairage selon l'une des revendications précédentes, **caractérisé par le fait que** le moyen pour le couplage de la lampe à décharge (La1) à barrière diélectrique comprend deux bornes (a, b) qui sont reliées chacune à un pôle de l'interrupteur (T1).

8. Système d'éclairage selon la revendication 7, **caractérisé par le fait que** le moyen pour le couplage de la lampe à décharge (La1) à barrière diélectrique comprend en plus l'enroulement secondaire (TR2-B) d'un autotransformateur (TR2), lequel enroulement secondaire (TR2-B) est branché entre un premier pôle de l'interrupteur (T1 ; T2) et la borne correspondante (a" ; a'") pour la lampe à décharge (La1) à barrière diélectrique, l'enroulement primaire (TR2-A) de l'autotransformateur (TR2) servant d'inductance de circuit oscillant.

9. Système d'éclairage selon l'une des revendications 1 à 7, **caractérisé par le fait que** le moyen pour le couplage de la lampe à décharge (La1) à barrière diélectrique comprend l'enroulement secondaire (TR1-B) d'un transformateur (TR1) ainsi que deux bornes (a', b') qui sont reliées chacune à un pôle de l'enroulement secondaire (TR1-B), l'enroulement primaire (TR1-A) du transformateur (TR1) servant d'inductance de circuit oscillant.

10. Système d'éclairage selon l'une des revendications précédentes, **caractérisé par le fait qu'**un condensateur tampon et de retour d'alimentation (C1) est branché en parallèle avec le circuit série composé de l'inductance de circuit oscillant (L1 ; TR1-A ; TR2-A) et l'interrupteur (T1).

11. Système d'éclairage selon la revendication 10, **caractérisé par le fait que** la valeur de capacité du condensateur tampon et de retour d'alimentation (C1) est supérieure à la valeur de capacité de circuit oscillant (C2).

12. Système d'éclairage selon l'une des revendications précédentes, **caractérisé par le fait que** le générateur d'impulsions est un IC (Integrated Circuit) générateur rectangulaire.

FIG. 1

FIG. 2

FIG. 3

FIG. 4

FIG. 6

FIG. 5